# EUROPEAN PATENT APPLICATION

(11) **EP 4 020 240 A1**
(43) Date of publication of application: **29.06.2022**
(21) Application number: 20854100.3
(22) Date of filing: 13.08.2020
(51) Int. Cl.: G06F 13/00

(54) **INFORMATION PROVIDING SERVER, INFORMATION PROCESSING DEVICE, AND INFORMATION PROCESSING METHOD**

(30) Priority: 20.08.2019 US 201962889113 P
(71) Applicant: Sony Interactive Entertainment Inc., Tokyo 108-0075 (JP)
(72) Inventor: TERAUCHI Daiki, Tokyo 108-0075 (JP); FUSE Atsushi, Tokyo 108-0075 (JP); TROMBETTA Steven, San Mateo, California 94404 (US)
(74) Representative: D Young & Co LLP
(86) International application number: PCT/JP2020/030760
(87) International publication number: WO 2021/033617

(57) **Abstract**

A data acquisition unit 210 acquires data regarding an activity from a plurality of activity servers. A request receiving unit 212 receives an acquisition request for activity information from a client device of a user. A data element acquisition unit 222 acquires a plurality of data elements according to the acquisition request from among pieces of data regarding an activity. An activity information creating unit 224 creates activity information in which identification information is added to a set of the plurality of data elements acquired. A providing unit 214 provides the activity information to a client device 4 of the user.

## Description

### [Technical Field]

The present disclosure relates to a technique of providing information regarding activity to a client device of a user.

### [Background Art]

For the purpose of providing motivation for game play, when a user achieves various missions during a game, the user is given virtual prizes corresponding to the missions. PTL 1 discloses a game system in which, when game software determines that a mission of game play is completed, a trophy identification (ID) corresponding to the mission is notified to a trophy management utility system. The virtual prizes are each called a "trophy," and the trophy of bronze, silver, or gold is given to the user according to a degree of difficulty of the mission.

### [Citation List]

### [Patent Literature]

[PTL 1]
Japanese Patent Laid-open No. 2016-97089

### [Summary]

### [Technical Problem]

The game system includes a plurality of kinds of activity servers for managing an activity of a user, such as a trophy server for managing an acquisition status of a trophy and a session server for managing a state of a game session. The activity servers are basically independent from each other, and provide necessary information to a game device of the user in response to a request from the user. In the game device, the information transmitted from each activity server is displayed on a dedicated screen. To view the acquisition status of trophies, for example, the user needs to change a display screen to cause a dedicated screen for the trophies to be displayed on a display. As described above, the user needs to take time to view desired information, and thus, a mechanism by which information can easily be viewed is desired to be fabricated.

### [Solution to Problem]

To solve the problem, an information providing server according to an aspect of the present invention includes a data acquisition unit that acquires data regarding an activity from a plurality of activity servers for managing an activity of a user, a request receiving unit that receives an acquisition request for activity information from a client device of the user, a data element acquisition unit that acquires a plurality of data elements according to the acquisition request from among the pieces of data regarding an activity, an activity information creating unit that creates activity information in which identification information is added to a set of the plurality of data elements acquired, and a providing unit that provides the activity information to the client device of the user.

An information processing device according to another aspect of the present invention includes an acquisition request creating unit that creates an acquisition request for a plurality of kinds of activity information, an acquisition unit that acquires the plurality of kinds of activity information from an information providing server, and an image display unit that displays data elements included in the plurality of kinds of activity information on a plurality of graphical user interfaces that are each in a predetermined shape.

A method for providing information according to another aspect of the present invention includes the steps of acquiring data regarding an activity from a plurality of activity servers for managing an activity of a user, receiving an acquisition request for activity information from a client device of the user, acquiring a plurality of data elements according to the acquisition request from among the pieces of data regarding an activity, creating activity information in which identification information is added to a set of the plurality of data element acquired, and providing the activity information to the client device of the user.

Note that any combination of the components described above and conversions of expressions of the present invention among methods, devices, systems, recording media, computer programs, and the like are also effective as aspects of the present invention.

### [Brief Description of Drawings]

[FIG. 1]

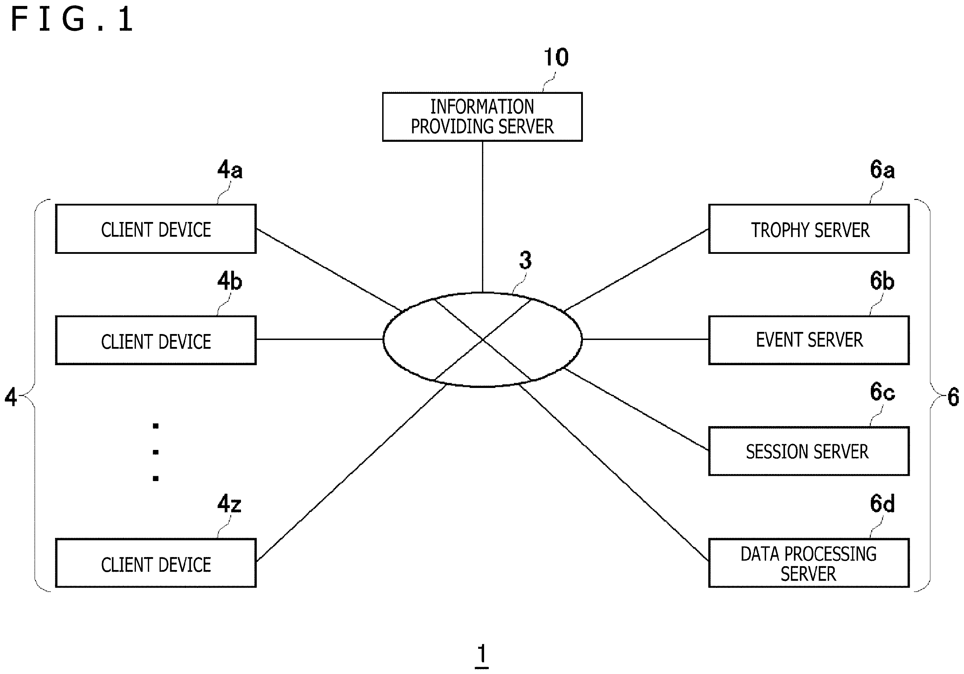

   FIG. 1 is a diagram illustrating an information processing system according to an embodiment.
[FIG. 2]

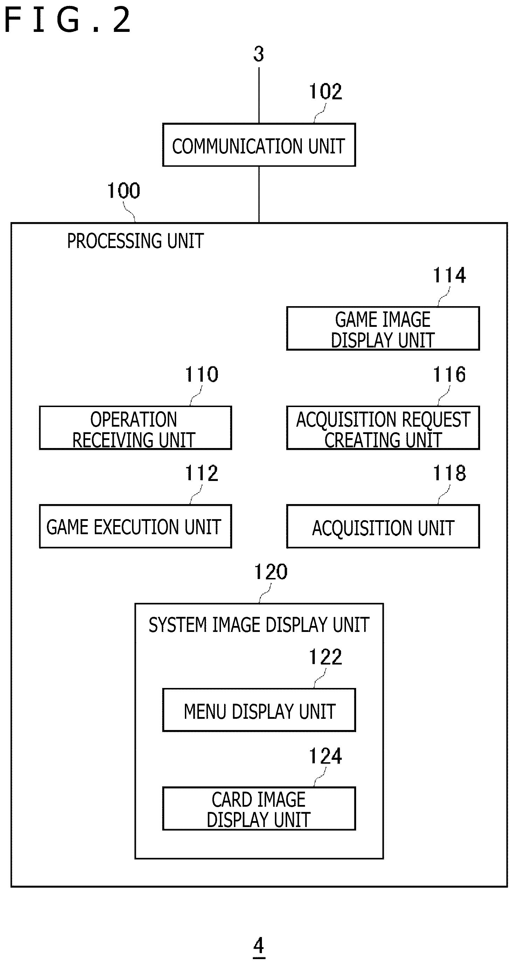

   FIG. 2 is a diagram illustrating a function block of a client device.
[FIG. 3]

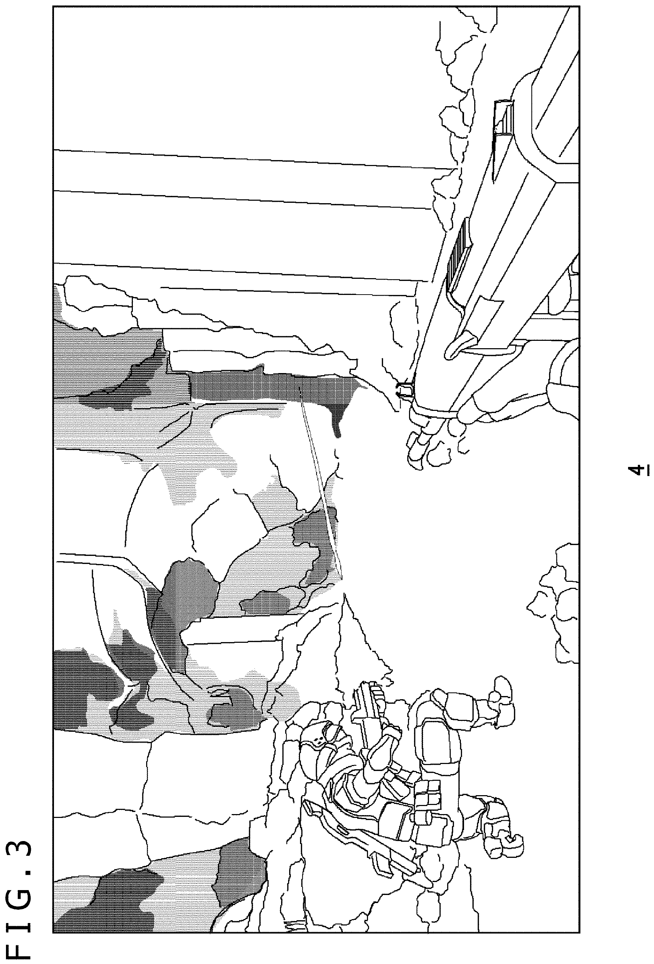

   FIG. 3 is a view illustrating an example of a game screen on which a user plays.
[FIG. 4]

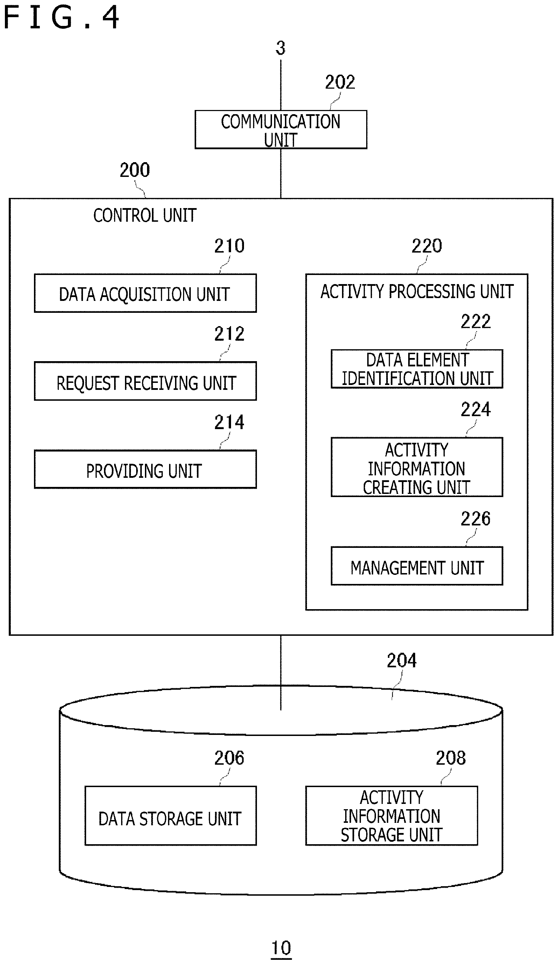

   FIG. 4 is a diagram illustrating a function block of an information providing server.
[FIG. 5]

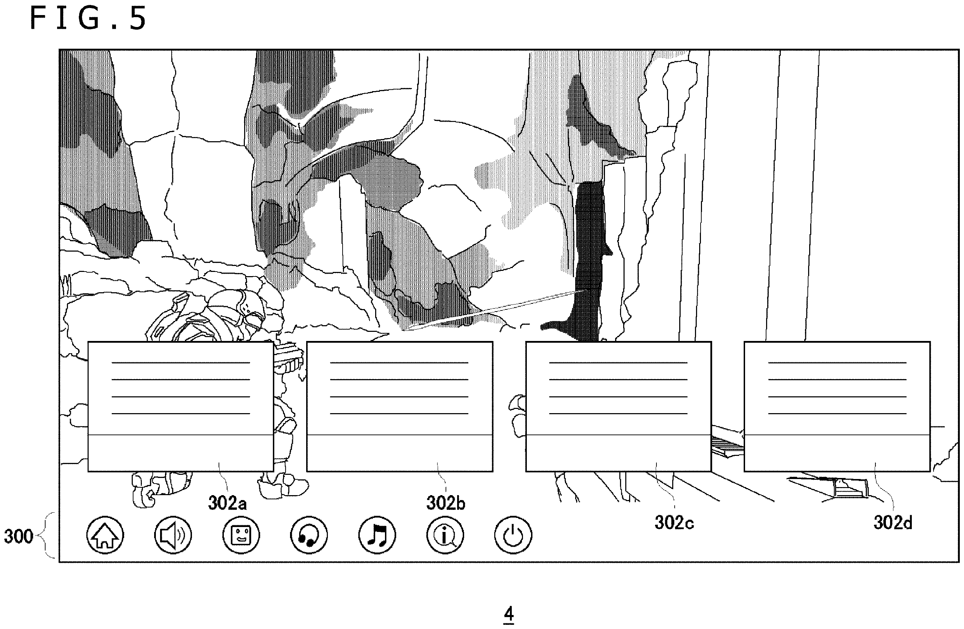

   FIG. 5 is a view illustrating an example in which a system image is displayed by being superimposed on a game image.

### [Description of Embodiment]

FIG. 1 illustrates an information processing system 1 according to an embodiment. The information processing system 1 includes a plurality of client devices 4, a plurality of kinds of activity servers 6, and an information providing server 10. In the information processing system 1, the client devices 4, the activity servers 6, and the information providing server 10 are connected to each other via a network 3 such as the Internet such that communication is available between the client devices 4, the activity servers 6, and the information providing server 10.

A client device 4 may be a game device that has system software to execute a game program. A user operates an input device such as a game controller to input operation information regarding a game. In the information processing system 1, the user has identification information (user ID) for uniquely identifying oneself, and can use various services by signing in to the services provided by the activity servers 6 and the information providing server 10.

The game program of the embodiment is configured such that, when an event occurs in the game, event information including an event code for identifying the event having occurred is output to the system software. The event is set to occur when progress of game play changes or action of a player character or a game character changes. The system software transmits the event information output, along with a user ID, to the activity servers 6.

The activity servers 6 each manage an activity of the user. The activity of the user includes not only an action of the user in the game and a result obtained by the action but also a state of the user in the game or in a session. Although, in the embodiment, the activity servers 6 include a trophy server 6a, an event server 6b, a session server 6c, and a data processing server 6d, an activity server 6 of another type may be provided.

The trophy server 6a manages an acquisition status of a trophy of the user and progress up to trophy acquisition. Various missions are set in the game, and when each mission is completed, a virtual prize (trophy) corresponding to the mission is given to the user. The mission has a complete condition that is a play condition for releasing a trophy for the user, and thus is also referred to as an "unlocked condition" of the trophy. When determining that the unlocked condition is satisfied, the client device 4 transmits the determination result to the trophy server 6a. The client device 4 may transmit event information related to satisfaction of the unlocked condition to the trophy server 6a. This allows the trophy server 6a to manage the activity of the user, including the acquisition status of a trophy of the user and the progress up to trophy acquisition.

The event server 6b manages a status of game play of the user. The client device 4 transmits, to the event server 6b, event information output from the game. The event server 6b acquires and stores the event information in chronological order to manage the activity of the user including progress of the game play. Note that the event information stored in chronological order may be provided to the data processing server 6d to be used for ex-post analysis of a result of user action in the game.

The session server 6c manages a status of a game session of the user. The session server 6c manages information regarding the game session, such as a title of the game to be played, whether or not participation in the session is to be accepted, and an icon and an online ID of a member participating in the session. As described above, the session server 6c manages the activity of the user, including the status of the game session.

The data processing server 6d acquires the event information in chronological order from the event server 6b to analyze the user action by machine learning. The data processing server 6d may directly acquire the event information from the client device 4. For example, learning an action history in the game by the machine learning enables specifying an action to be taken next by 90% of users acquiring a trophy. The learning also reveals that a user indicating a specific play tendency is weak against a boss character to be fought next. The data processing server 6d manages a learning model acquired by the machine learning as described above, as a future activity of the user.

The trophy server 6a, the event server 6b, the session server 6c, and the data processing server 6d each operate as a discrete, independent activity server 6. In a conventional game system, the client devices 4 individually access each activity server 6 to acquire necessary information, so that it is difficult to uniformly handle various kinds of data regarding an activity that are managed by each activity server 6. Thus, the embodiment enables not only the information providing server 10 to acquire data regarding an activity from the plurality of activity servers 6 and integrate data regarding different kinds of activities, but also each client device 4 to display a plurality of kinds of activity information in an integrated format.

FIG. 2 illustrates a function block of a client device. Each client device 4 includes a processing unit 100 and a communication unit 102. The processing unit 100 includes an operation receiving unit 110, a game execution unit 112, a game image display unit 114, an acquisition request creating unit 116, an acquisition unit 118, and a system image display unit 120. The system image display unit 120 is implemented by the system software and includes a menu display unit 122 and a card image display unit 124.

Each element illustrated in FIG. 2 as the function block for performing various kinds of processing can be configured with a circuit block, a memory, and any other large-scale integration (LSI) in hardware-wise, and is implemented by system software, a game program loaded into the memory, and the like in software-wise. Thus, those skilled in the art can understand that the function block can be implemented by various forms such as only hardware, only software, or a combination thereof, and the function block is not limited to any one of them.

The communication unit 102 receives operation information acquired when the user operates a button or the like of an input device, and provides the operation information to the operation receiving unit 110. The communication unit 102 also transmits an acquisition request for activity information to the information providing server 10, and receives the activity information from the information providing server 10. The communication unit 102 may have a function of a combination of a wireless communication module and a wired communication module.

The operation receiving unit 110 receives the operation information input using the input device, through the communication unit 102. In the embodiment, the game execution unit 112 executes the game program and creates image data and voice data regarding the game. The game execution unit 112 has functions that are implemented by the system software, the game program, and hardware such as a graphics processing unit (GPU). The game is an example of applications, and thus the game execution unit 112 may execute an application other than the game.

While the user plays the game, the operation receiving unit 110 supplies the operation information input using the input device, to the game execution unit 112, and then the game execution unit 112 performs arithmetic processing of moving the player character in a virtual space on the basis of the operation information. The game execution unit 112 includes a GPU that performs rendering processing and the like, and creates game image data and game voice data from a viewpoint position (virtual camera) in the virtual space, on the basis of a result of the arithmetic processing in the virtual space. The game image display unit 114 causes a display to display a game image, and a voice providing unit (not illustrated) causes a speaker to output a game voice. The client device 4 may be connected to a television equipped with a display and a speaker to cause the television to output the game image and the game voice.

FIG. 3 illustrates an example of a game screen on which the user plays. The user plays the game by operating the input device while viewing the game image and listening to the game voice. When the user presses a predetermined button of the input device for a short time while playing the game, the operation receiving unit 110 receives the operation of pressing the button for a short time.

The operation receiving unit 110 supplies information regarding the operation of pressing the predetermined button for a short time, the operation being received during performance of the game, to the acquisition request creating unit 116 and the system image display unit 120. In the system image display unit 120, the menu display unit 122 displays a system image including a plurality of menu items and being superimposed on the game image. When the system image is displayed while being superimposed on the game image, the operation receiving unit 110 supplies, to the system software, operation information to be received subsequently.

Then, the acquisition request creating unit 116 creates an acquisition request for a plurality of kinds of activity information. The acquisition request includes, along with the user ID, information for identifying data elements constituting the plurality of kinds of activity information. The information for identifying the data elements constituting the activity information is also referred below to as "data element information." The plurality of kinds of activity information may include activity information regarding a game session in which the user is currently playing, activity information regarding a game in which a friend of the user is currently playing, activity information regarding a trophy, and activity information regarding recommended game play.

For example, an acquisition request for the activity information regarding a game session that is currently being played includes a plurality of pieces of data element information that identifies a game session name, the number of participants in the session, icons of the participants in the session, and the like. The client device 4 can display the activity information on its display when receiving the plurality of data elements identified by the abovementioned plurality of pieces of data element information and provided by the information providing server 10.

The acquisition request creating unit 116 creates the acquisition request for the plurality of kinds of activity information suitable for a game title. Combinations of the data elements constituting the activity information may be hard-coded into the game program. When the combinations of the data elements of the plurality of kinds of activity information are hard-coded for each game scene, the acquisition request creating unit 116 creates the acquisition request for the plurality of kinds of activity information suitable for each game scene.

Note that the acquisition request creating unit 116 creates the acquisition request for the plurality of kinds of activity information not only when receiving operation of pressing the predetermined button for a short time while a game screen is being displayed, but also when receiving the operation of pressing the predetermined button for a short time while a home screen of the system software is being displayed. The system software hard-codes the combinations of the data elements constituting the plurality of kinds of activity information, and thus the acquisition request creating unit 116 creates the acquisition request for the plurality of kinds of activity information.

FIG. 4 illustrates a function block of an information providing server. The information providing server 10 includes a control unit 200, a communication unit 202, and a storage unit 204. The control unit 200 includes a data acquisition unit 210, a request receiving unit 212, a providing unit 214, and an activity processing unit 220, and the activity processing unit 220 includes a data element acquisition unit 222, an activity information creating unit 224, and a management unit 226. The storage unit 204 includes a data storage unit 206 and an activity information storage unit 208. The communication unit 202 receives data regarding an activity from the various activity servers 6, and receives an acquisition request for activity information from each client device 4.

Each element illustrated in FIG. 4 as the function block for performing various kinds of processing can be configured with a circuit block, a memory, and another LSI in hardware-wise, and is implemented by system software, a game program loaded into the memory, and the like in software-wise. Thus, those skilled in the art can understand that the function block can be implemented by various forms such as only hardware, only software, or a combination thereof, and the function block is not limited to any one of them.

The data acquisition unit 210 acquires data regarding an activity transmitted from the plurality of activity servers 6, and stores the data in the data storage unit 206 while associating the data with the user ID. When the data regarding an activity is updated, the activity servers 6 may transmit the updated data to the information providing server 10. When the request receiving unit 212 receives an acquisition request for activity information, the data acquisition unit 210 may transmit an acquisition request for data elements related to the acquisition request to the activity servers 6 to acquire the data elements.

The request receiving unit 212 receives an acquisition request for a plurality of kinds of activity information that is transmitted from the client device 4 of the user. The request receiving unit 212 supplies the acquisition request to the activity processing unit 220.

In the activity processing unit 220, the data element acquisition unit 222 extracts the user ID and the data element information from the acquisition request, and searches for the data elements associated with the user ID from among the pieces of data stored in the data storage unit 206. This causes the data element acquisition unit 222 to acquire a plurality of data elements according to the acquisition request.

The activity information creating unit 224 creates activity information in which identification information is added to a set of the plurality of data elements acquired by the data element acquisition unit 222. When the acquisition request transmitted from the client device 4 includes an acquisition request for four kinds of activity information, the activity information creating unit 224 creates the four kinds of activity information in which different kinds of identification information are added to respective sets of a plurality of data elements. That is, the activity information creating unit 224 creates first activity information, second activity information, third activity information, and fourth activity information, to each of which different identification information is added. The management unit 226 stores the first activity information, the second activity information, the third activity information, and the fourth activity information, which have been created, in the activity information storage unit 208.

The providing unit 214 provides the first activity information, the second activity information, the third activity information, and the fourth activity information, which have been created, to the client device 4 of the user. In the client device 4, the acquisition unit 118 acquires the first activity information, the second activity information, the third activity information, and the fourth activity information from the information providing server 10, and supplies the pieces of information to the card image display unit 124.

FIG. 5 illustrates an example in which a system image is displayed by being superimposed on a game image. The menu display unit 122 sets a function icon selection region 300 in a lower row in a display screen, and disposes a plurality of menu icons side by side. When the user selects a menu icon, a system function associated with the icon starts up.

The card image display unit 124 displays the data elements included in the activity information on graphical user interfaces (referred below to as "GUIs") 302a to 302d in a predetermined card-like shape. For example, a plurality of data elements of the first activity information, a plurality of data elements of the second activity information, a plurality of data elements of the third activity information, and a plurality of data elements of the fourth activity information may be displayed respectively on the GUI 302a, the GUI 302b, the GUI 302c, and the GUI 302d. When the card image display unit 124 displays data elements included in a plurality of kinds of activity information on the plurality of corresponding GUIs 302, each having a common format, the user can view a plurality of kinds of activity information at the same time.

For example, the first activity information may be information regarding a game session in which the user plays together with another player, and the second activity information may be information regarding a trophy acquired in the game by the user. The third activity information may include data elements acquired from the plurality of activity servers 6. As described above, when the card image display unit 124 displays the pieces of information regarding an activity managed by the discrete activity servers 6 on the plurality of corresponding GUIs 302 disposed side by side, the user can efficiently check the activity information.

In the information providing server 10, the management unit 226 manages the activity information to which identification information is added and that is stored in the activity information storage unit 208. Specifically, the management unit 226 periodically checks the activity server 6 as to whether the data elements constituting the activity information are updated. When the data elements are updated, the updated data elements are stored as an update history in chronological order instead of being overwritten. As a result, the management unit 226 manages transition of the activity information to allow the history of the activity information to be useful for analysis of a play tendency of the user, for example.

The present disclosure has been described above on the basis of the embodiment. The embodiment is an example, and it is understood by those skilled in the art that various modifications are available for combinations of each of components of the embodiment and each of processing processes thereof and that such modifications are also within the scope of the present disclosure.

### [Industrial Applicability]

The present disclosure can be used in a technical field of providing information.

### [Reference Signs List]

- 1:: Information processing system
- 4:: Client device
- 6:: Activity server
- 6a:: Trophy server
- 6b:: Event server
- 6c:: Session server
- 6d:: Data processing server
- 10:: Information providing server
- 100:: Processing unit
- 102:: Communication unit
- 110:: Operation receiving unit
- 112:: Game execution unit
- 114:: Game image display unit
- 116:: Acquisition request creating unit
- 118:: Acquisition unit
- 120:: System image display unit
- 122:: Menu display unit
- 124:: Card image display unit
- 200:: Control unit
- 202:: Communication unit
- 204:: Storage unit
- 206:: Data storage unit
- 208:: Activity information storage unit
- 210:: Data acquisition unit
- 212:: Request receiving unit
- 214:: Providing unit
- 220:: Activity processing unit
- 222:: Data element acquisition unit
- 224:: Activity information creating unit
- 226:: Management unit

## Claims

1. An information providing server comprising:
a data acquisition unit that acquires data regarding an activity from a plurality of activity servers for managing an activity of a user;
a request receiving unit that receives an acquisition request for activity information from a client device of the user;
a data element acquisition unit that acquires a plurality of data elements according to the acquisition request from among the pieces of data regarding an activity;
an activity information creating unit that creates activity information in which identification information is added to a set of the plurality of data elements acquired; and
a providing unit that provides the activity information to the client device of the user.

2. The information providing server according to claim 1, wherein a plurality of data elements included in the activity information is displayed on one graphical user interface in the client device.

3. The information providing server according to claim 1 or 2, further comprising:
a management unit that manages the activity information to which identification information is added,
wherein the management unit stores a history of the activity information in a storage unit.

4. An information processing device comprising:
an acquisition request creating unit that creates an acquisition request for a plurality of kinds of activity information;
an acquisition unit that acquires the plurality of kinds of activity information from an information providing server; and an image display unit that displays data elements included in the plurality of kinds of activity information on a plurality of graphical user interfaces that are each in a predetermined shape.

5. A method for providing information, comprising the steps of:
acquiring data regarding an activity from a plurality of activity servers for managing an activity of a user;
receiving an acquisition request for activity information from a client device of the user;
acquiring a plurality of data elements according to the acquisition request from among the pieces of data regarding an activity;
creating activity information in which identification information is added to a set of the plurality of data element acquired; and
providing the activity information to the client device of the user.

6. A program that allows a computer to execute the functions of:
acquiring data regarding an activity from a plurality of activity servers that manages an activity of a user;
receiving an acquisition request for activity information from a client device of the user;
acquiring a plurality of data elements according to the acquisition request from among the pieces of data regarding an activity;
creating activity information in which identification information is added to a set of the plurality of data element acquired; and
providing the activity information to the client device of the user.
